# EUROPÄISCHE PATENTSCHRIFT

(11) **EP 2 361 192 B1**
(45) Veröffentlichungstag und Bekanntmachung des Hinweises auf die Patenterteilung: **19.09.2012**
(21) Anmeldenummer: 09759928.6
(22) Anmeldetag: 18.11.2009
(51) Int. Cl.: B60K 6/48, B60W 10/08, B60W 10/30, F16H 61/00, B60W 30/18, B60W 20/00

(54) **VERFAHREN ZUM BETREIBEN EINES FAHRZEUGHYBRIDANTRIEBSSTRANGES MIT EINER BRENNKRAFTMASCHINE UND MIT EINER ELEKTRISCHEN MASCHINE**
METHOD FOR OPERATING A VEHICLE HYBRID DRIVE TRAIN HAVING AN INTERNAL COMBUSTION ENGINE AND HAVING AN ELECTRIC MACHINE
PROCÉDÉ DE FONCTIONNEMENT DE LA CHAÎNE CINÉMATIQUE D'UN VÉHICULE HYBRIDE ÉQUIPÉ D'UN MOTEUR À COMBUSTION INTERNE ET D'UN MOTEUR ÉLECTRIQUE

(30) Priorität: 02.12.2008 DE 102008044272
(43) Veröffentlichungstag der Anmeldung: 31.08.2011
(73) Patentinhaber: ZF Friedrichshafen AG, 88038 Friedrichshafen (DE)
(72) Erfinder: ALLGAIER, Bernd, 88079 Kressbronn (DE); SCHIELE, Peter, 88079 Kressbronn (DE); SOHLER, Michael, 88316 Isny (DE)
(86) Internationale Anmeldenummer: PCT/EP2009/065350
(87) Internationale Veröffentlichungsnummer: WO 2010/063574

(56) Entgegenhaltungen:
- EP-A2- 1 731 802
- DE-A1- 19 917 665
- US-A1- 2005 079 942

## Beschreibung

Die Erfindung betrifft ein Verfahren zum Betreiben eines Fahrzeughybridantriebsstranges mit einer Brennkraftmaschine und mit einer elektrischen Maschine gemäß der im Oberbegriff des Patentanspruches 1 näher definierten Art. EP 1731802 offenbart die Merkmale des oberbegriffs des Anspruchs 1.

Bei aus der Praxis bekannten Automatgetrieben ist für die Ölversorgung der Getriebehydraulik und der Getriebeschmierung üblicherweise eine mechanische und im Inneren der Getriebeeinrichtungen jeweils integrierte Ölpumpeneinrichtung vorgesehen. Die Ölpumpeneinrichtungen werden jeweils auf die Getriebeeingangsdrehzahl ausgelegt, welche üblicherweise der Drehzahl einer Brennkraftmaschine entspricht. In diesem Fall werden die mechanischen Ölpumpeneinrichtungen jeweils auf das Drehzahlband des Verbrennungsmotors, welches vorzugsweise 600 bis 7000 Umdrehungen je Minute entspricht, optimiert.

Getriebeeinrichtungen von Fahrzeughybridantriebssträngen, welche neben einer Brennkraftmaschine auch eine elektrische Maschine zum Antreiben des Fahrzeuges aufweisen, sind im Betrieb eines Fahrzeuges auch bei abgeschalteter Brennkraftmaschine Belastungen ausgesetzt. Aus diesem Grund sind die Getriebeeinrichtungen zur Vermeidung von Beschädigungen und um eine Betriebsbereitschaft einer Getriebeeinrichtung aufrechterhalten zu können, auch dann mit Hydraulikfluid zu beaufschlagen. Zur Umsetzung dieser Vorgabe werden Getriebeeinrichtungen bei abgeschaltetem Verbrennungsmotor oftmals über eine elektrische Zusatzpumpe mit dem gewünschten Hydraulikfluidvolumenstrom beaufschlagt. Dann ist selbst bei abgeschalteter Verbrennungsmaschine und im Fahrzeugstillstand im Bereich der Getriebeeinrichtung eine Übersetzung einlegbar, eine Parksperre eines insbesondere mit einer E-Schaltung ausgeführten Getriebeeinrichtung auslegbar, eine in der Getriebeeinrichtung eingelegte Übersetzung durch eine Aufrechterhaltung der Ölversorgung und einen Ausgleich von Leckageströmen haltbar sowie ein Anfahrvorgang eines Fahrzeuges in gewünschtem Umfang durchführbar.

Darüber hinaus sind mittels den elektrischen Zusatzpumpen während elektrischer Fahrbetriebszustände von Fahrzeugen bei niedrigen Getriebeeingangsdrehzahlen auch Schaltungen durchführbar und jeweils Fahrmomente im Zug- oder Schubbetrieb der Hybridantriebsstränge sowie elektromaschinenseitige Startvorgänge der Brennkraftmaschinen realisierbar.

Nachteilhafterweise verursachen die zusätzlichen elektrischen Pumpeneinrichtungen hohe Herstellkosten und jeweils einen großen Bauraumbedarf sowie eine hohes Eigengewicht von Fahrzeughybridantriebssträngen, was jedoch unerwünscht ist.

Der vorliegenden Erfindung liegt daher die Aufgabe zugrunde, ein Verfahren zum Betreiben eines Fahrzeughybridantriebsstranges zur Verfügung zu stellen, mittels welchem eine Getriebeeinrichtung eines kostengünstig herstellbaren und einen geringen Bauraumbedarf sowie ein niedriges Eigengewicht aufweisenden Fahrzeughybridantriebsstranges über den gesamten Betriebsbereich des Fahrzeughybridantriebsstranges in gewünschtem Umfang mit Hydraulikfluid versorgbar ist.

Erfindungsgemäß wird diese Aufgabe mit einem Verfahren mit den Merkmalen des Patentanspruches 1 gelöst.

Bei dem erfindungsgemäßen Verfahren zum Betreiben eines Fahrzeughybridantriebsstranges mit einer Brennkraftmaschine und mit einer elektrischen Maschine, deren Drehmomente an einem Abtrieb des Fahrzeughybridantriebsstranges anlegbar sind, mit einer zwischen der Brennkraftmaschine und der elektrischen Maschine angeordneten Kupplungseinrichtung, mit einer im Fahrzeughybridantriebsstrang in Bezug auf die Brennkraftmaschine der Kupplungseinrichtung nachgeschalteten und von der Brennkraftmaschine sowie der elektrischen Maschine antreibbaren Ölpumpeneinrichtung und mit einer Getriebeeinrichtung, die mehrere Schaltelemente zur Darstellung verschiedener Übersetzungen aufweist und die von der Ölpumpeneinrichtung betriebszustandsabhängig mit Hydraulikfluid versorgt wird, wird eine Drehzahl der elektrischen Maschine unabhängig oder zumindest teilweise unabhängig von der Drehzahl der Brennkraftmaschine eingestellt, um die Getriebeeinrichtung jeweils mit einem für den jeweiligen Betriebspunkt der Getriebeeinrichtung erforderlichen Hydraulikfluidvolumenstrom zu versorgen.

Damit ist die Drehzahl der elektrischen Maschine unabhängig von der Drehzahl der Brennkraftmaschine und ohne elektrische Zusatzpumpe derart ansteuerbar, dass die mechanische Ölpumpeneinrichtung selbst bei abgeschalteter Brennkraftmaschine oder bei im Bereich Kupplungseinrichtung abgekoppelter Brennkraftmaschine in gewünschtem Umfang elektromaschinenseitig angetrieben wird und eine ausreichende Ölversorgung der Getriebeeinrichtung für die jeweiligen Betriebspunkte der Getriebeeinrichtung bzw. des Hybridgetriebes bereitstellt.

So besteht beispielsweise während eines Fahrzeugstillstandes und bei abgeschalteter oder abgekoppelter Brennkraftmaschine die Möglichkeit, eine Ölversorgung der Getriebeeinrichtung über einen entsprechenden elektromaschinenseitigen Antrieb der Ölpumpeneinrichtung aufrechtzuerhalten und in der Getriebeeinrichtung in den Kraftfluss der Getriebeeinrichtung betriebszustandsabhängig zugeschaltete Schaltelemente mit einem minimalen Druck anzusteuern und Leckagen im Hydrauliksystem der Getriebeeinrichtung abzudecken. Dies ist vorzugsweise mit einer Drehzahl der elektrischen Maschine von beispielsweise 200 Umdrehungen je Minute durchführbar, wobei die mechanische Ölpumpeneinrichtung für diesen Betriebsbereich unter Umständen zu optimieren bzw. für diesen Betriebsbereich auszulegen ist.

Die Drehzahl der elektrischen Maschine ist vorzugsweise auf Drehzahlwerte absenkbar, zu welchen eine Betriebsbereitschaft der Getriebeeinrichtung durch eine minimale Ölversorgung aufrechterhalten wird, wobei die Übertragungsfähigkeiten der Schaltelemente der Getriebeeinrichtung sowie im Bereich der Schaltelemente auftretenden Schleppmomente dann reduziert sind.

Getriebeeinrichtungen von erfindungsgemäß betriebenen Fahrzeughybridantriebssträngen sind somit über den gesamten Betriebsbereich des Fahrzeughybridantriebsstranges ohne elektrische Zusatzpumpe in gewünschtem Umfang mit Hydraulikfluid versorgbar, womit Fahrzeughybridantriebsstränge im Vergleich zu Fahrzeughybridantriebssträngen mit elektrischen Zusatzpumpen kostengünstiger herstellbar sind und einen geringen Bauraumbedarf sowie ein niedriges Eigengewicht aufweisen.

Bei einer vorteilhaften Variante des Verfahrens nach der Erfindung entspricht die Drehzahl der elektrischen Maschine im Bereich des Fahrzeugstillstandes einem Stilistandsdrehzahlwert, der kleiner als eine Leerlaufdrehzahl der Brennkraftmaschine ist, wobei die von der elektrischen Maschine angetriebene Ölpumpeneinrichtung die Schaltelemente zur Darstellung eines aktuellen Betriebszustandes der Getriebeeinrichtung wenigstens teilweise in zugeschaltetem Zustand hält.

Sind während der Aufrechterhaltung der Betriebsbereitschaft der Getriebeeinrichtung weitere öldruck- bzw. volumenrelevante Aktivitäten in der Getriebeeinrichtung auszuführen, ist die Drehzahl der elektrischen Maschine entsprechend zu variieren, um den jeweils gewünschten Betriebszustand der Getriebeeinrichtung aufrecht erhalten zu können.

So ist es bei einer weiteren Variante des erfindungsgemäßen Verfahrens vorgesehen, dass der Drehzahlwert der elektrischen Maschine im Bereich des Fahrzeugstillstandes ausgehend vom Stillstandsdrehzahlwert angehoben wird, wenn eine Anforderung zum Einlegen einer Übersetzung in der Getriebeeinrichtung ausgehend von einem Neutralbetriebszustand vorliegt, während dem ein Kraftfluss des Fahrzeughybridantriebsstranges im Bereich der Getriebeeinrichtung unterbrochen ist.

Der Drehzahlwert der elektrischen Maschine wird bei einer weiteren Variante des Verfahrens nach der Erfindung im Bereich des Fahrzeugstillstandes angehoben, wenn eine Schaltanforderung für einen Übersetzungswechsel von einer Anfahrübersetzung in eine höhere Übersetzungsstufe oder von einer höheren Übersetzungsstufe in eine Anfahrübersetzung vorliegt.

Der Drehzahlwert der elektrischen Maschine wird im Bereich des Fahrzeugstillstandes ausgehend vom Stillstandsdrehzahlwert bei einer weiteren Variante des erfindungsgemäßen Verfahrens angehoben, wenn eine Anforderung zum Auslegen einer Parksperreneinrichtung vorliegt.

Zusätzlich oder alternativ hierzu wird der Drehzahlwert der elektrischen Maschine ausgehend vom Stillstandsdrehzahlwert bei Vorliegen einer Anforderung für einen Anfahrvorgang des Fahrzeuges oder bei Vorliegen einer Anforderung zum Starten der Brennkraftmaschine angehoben.

Im Fahrbetrieb, d. h. bei einer Fahrzeuggeschwindigkeit gleich oder größer Null, wird der Drehzahlwert der elektrischen Maschine in Abhängigkeit des über die Getriebeeinrichtung zu führenden Drehmomentes eingestellt. Dabei wird der für die Betriebsweise der Getriebeeinrichtung erforderliche Betätigungsdruck in der Getriebeeinrichtung in Abhängigkeit des über die Getriebeeinrichtung zu führenden Fahrmomentes und der jeweils damit korrespondierenden bzw. der dafür erforderlichen Übertragungsfähigkeiten der Schaltelemente bestimmt und die mit dem erforderlichen Betätigungsdruck korrespondierende minimale Drehzahl der elektrischen Maschine ermittelt.

In Abhängigkeit des jeweils vorliegenden Betriebszustandes eines Fahrzeughybridantriebsstranges besteht die Möglichkeit, dass die jeweils erforderliche Drehzahl der elektrischen Maschine deutlich geringer als die Leerlaufdrehzahl der Brennkraftmaschine ist und das Anfahrelement des Fahrzeughybridantriebsstranges bzw. die Anfahrkupplung bereits bei sehr geringen Abtriebsdrehzahlen bzw. Fahrzeuggeschwindigkeiten geschlossen werden kann, wobei dann während eines Anfahrvorganges geringe Verlustleistungen entstehen.

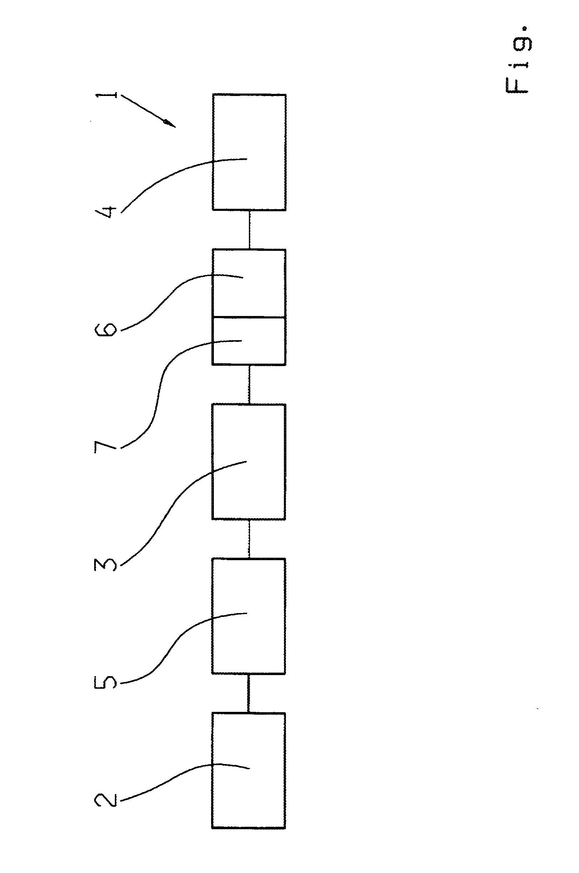

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Die einzige Figur der Zeichnung zeigt eine stark schematisierte Darstellung eines Fahrzeughybridantriebsstranges, anhand weicher die erfindungsgemäße Vorgehensweise näher erläutert wird.

In der Figur ist ein Fahrzeughybridantriebsstrang 1 mit einer Brennkraftmaschine 2 und mit einer elektrischen Maschine 3, deren Drehmomente an einem Abtrieb 4 des Fahrzeughybridantriebsstranges 1 anlegbar sind, dargestellt. Zwischen der Brennkraftmaschine 2 und der elektrischen Maschine 3 ist eine Kupplungseinrichtung 5 angeordnet, mittels der die Brennkraftmaschine 2 mit der elektrischen Maschine 3 drehfest verbindbar ist oder die Brennkraftmaschine 2 vom restlichen Bereich des Fahrzeughybridantriebsstranges abkoppelbar ist.

Zusätzlich ist zwischen der elektrischen Maschine 3 und dem Abtrieb 4 eine Getriebeeinrichtung 6 vorgesehen, die zur Darstellung verschiedener Übersetzungen mehrere nicht näher dargestellte Schaltelemente aufweist und die von einer getriebeeingangsseitig angeordneten Ölpumpeneinrichtung 7 betriebszustandsabhängig mit Hydraulikfluid versorgt wird. Die Ölpumpeneinrichtung 7 ist in Abhängigkeit eines Betriebszustandes der Kupplungseinrichtung 5 sowohl von der Brennkraftmaschine 2 als auch von der elektrischen Maschine 3 antreibbar, wobei der Antrieb der Ölpumpeneinrichtung 7 bei geöffneter Kupplungseinrichtung 5 und im Fahrzeugstillstand im Wesentlichen über die elektrische Maschine 3 erfolgt. Die Ölpumpeneinrichtung 7 ist vorliegend in einem Gehäuse der Getriebeeinrichtung 6 angeordnet und bei entsprechendem Kraftfluss in der Getriebeeinrichtung auch im Schubbetrieb des Fahrzeughybridantriebsstranges 1 ausgehend vom Abtrieb 4 antreibbar.

Im Fahrzeugstillstand und bei abgeschalteter Brennkraftmaschine 2 wird die Drehzahl der elektrischen Maschine 3 auf einen Stillstandsdrehzahlwert eingestellt, der kleiner als eine Leerlaufdrehzahl der Brennkraftmaschine 2 ist. Dabei hält die von der elektrischen Maschine 3 angetriebene Ölpumpeneinrichtung 7 mit einem definierten Fördervolumen die Schaltelemente der Getriebeeinrichtung 6 zur Darstellung eines aktuellen Betriebszustandes der Getriebeeinrichtung 6 wenigstens teilweise in zugeschaltetem Zustand und gleicht zusätzlich Leckageverluste im Bereich des Hydrauliksystems der Getriebeeinrichtung 6 aus. Der Betriebszustand der Getriebeeinrichtung 6 entspricht im Wesentlichen einem Neutralbetriebszustand, während dem ein Kraftfluss des Fahrzeughybridantriebsstranges 1 im Bereich der Getriebeeinrichtung 6 unterbrochen ist. Der Stillstandsdrehzahlwert liegt bei dem vorliegenden Ausführungsbeispiel des Fahrzeughybridantriebsstranges in einem Drehzahlbereich von ca. 180 bis 220 Umdrehungen je Minute, wobei die Ölpumpeneinrichtung 7 für diesen Betriebsbereich optimiert ist.

Auf dem Niveau des Stillstandsdrehzahlwertes ist die Drehzahl der elektrischen Maschine 3 im Vergleich zur Leerlaufdrehzahl der Brennkraftmaschine 2 derart abgesenkt, dass eine minimale Ölversorgung der Getriebeeinrichtung 6 vorliegt und eine gewisse Betriebsbereitschaft der Getriebeeinrichtung 6 vorliegt, während der die Übertragungsfähigkeit der Schaltelemente sowie im Bereich der Schaltelemente verursachte Schleppmomente verringert sind. Damit werden im Fahrzeugstillstand und in Verbindung mit der dann auch abgesenkten Getriebeeingangsdrehzahl im Bereich der Getriebeeinrichtung 6 geringere Verlustleistungen erzeugt.

Ausgehend von dem vorbeschriebenen Betriebszustand des Fahrzeugantriebsstranges führen verschiedene Anforderungen, die einen Wechsel des Betriebszustandes des Fahrzeughybridantriebsstranges verursachen, zu einem erhöhten Hydraulikvolumenbedarf im Bereich der Getriebeeinrichtung 6, der nur durch Anheben der Drehzahl der elektrischen Maschine deckbar ist.

Eine derartige Anforderung stellt beispielsweise eine Anforderung zum Einlegen einer Übersetzung in der Getriebeeinrichtung ausgehend vom Neutralbetriebszustand der Getriebeeinrichtung 6 oder eine Anforderung zum Auslegen einer Parksperreneinrichtung dar. Darüber hinaus wird der Drehzahlwert der elektrischen Maschine 3 auch bei Vorliegen einer Anforderung zum Starten der Brennkraftmaschine oder bei Vorliegen einer Anforderung für einen Anfahrvorgang des Fahrzeuges ausgehend vom Stillstandsdrehzahlwert angehoben, um die Getriebeeinrichtung 6 mit der jeweils dafür erforderlichen Funktionalität darstellen zu können.

Darüber hinaus wird die Drehzahl der elektrischen Maschine bei Vorliegen einer Anforderung für einen Übersetzungswechsel von einer ersten Übersetzungsstufe bzw. einer Anfahrübersetzung in eine zweite bzw. höhere Übersetzungsstufe oder bei einer Rückschaltung von einer höheren bzw. zweiten Übersetzungsstufe in die erste Übersetzungsstufe bzw. die Anfahrübersetzung der Getriebeeinrichtung 6 angehoben.

Im Fahrbetrieb, das bedeutet bei einer Fahrzeuggeschwindigkeit gleich oder größter Null, steilen vor allem das über die Getriebeeinrichtung 6 zu führende Drehmoment sowie die im Fahrbetrieb jeweils einzustellenden Übertragungsfähigkeiten der Schaltelemente der Getriebeeinrichtung 6 die für die Ermittlung des erforderlichen Hydraulikdruck in der Getriebeeinrichtung 6 und damit der minimalen Antriebsdrehzahl der elektrischen Maschine 3 zu beachtenden Betriebsgrößen dar.

Dies resultiert aus der Tatsache, dass die Schaltelemente mit der zur Übertragung des Fahrmomentes erforderlichen Übertragungsfähigkeit und dem damit korrespondierenden Betätigungsdruck zu beaufschlagen sind. Die dafür erforderliche Drehzahl der elektrischen Maschine 3 liegt in bestimmten Betriebszuständen des Fahrzeughybridantriebsstranges 1 deutlich unter der Leerlaufdrehzahl der Brennkraftmaschine 2, weshalb ein Anfahrelement bzw. eine Anfahrkupplung des Fahrzeughybridantriebsstranges im Bereich der Getriebeeinrichtung 6 bereits bei sehr geringen Abtriebsdrehzahlen bzw. niedrigen Fahrzeuggeschwindigkeiten geschlossen werden kann und während eines Anfahrvorganges eines Fahrzeuges nur geringe Verlustleistungen entstehen.

Mittels der erfindungsgemäßen Vorgehensweise ist eine Getriebeeinrichtung eines Fahrzeughybridantriebsstranges ohne zusätzliche elektrische Pumpeneinrichtung über den gesamten Betriebsbereich eines Fahrzeughybridantriebsstranges mit einem betriebszustandsabhängig erforderlichen Hydraulikfluidvolumenstrom versorgbar, womit erfindungsgemäß betriebene Fahrzeughybridantriebsstränge im Vergleich zu aus der Praxis bekannten Fahrzeughybridantriebssträngen kostengünstiger herstellbar sind und durch einen geringeren Bauraumbedarf sowie ein niedrigeres Eigengewicht gekennzeichnet sind.

### Bezugszeichen

- 1: Fahrzeughybridantriebsstrang
- 2: Brennkraftmaschine
- 3: elektrische Maschine
- 4: Abtrieb
- 5: Kupplungseinrichtung
- 6: Getriebeeinrichtung
- 7: Ölpumpeneinrichtung

## Patentansprüche

1. Verfahren zum Betreiben eines Fahrzeughybridantriebsstranges (1) mit einer Brennkraftmaschine (2) und mit einer elektrischen Maschine (3), deren Drehmomente an einem Abtrieb (4) des Fahrzeughybridantriebsstranges (1) anlegbar sind, mit einer zwischen der Brennkraftmaschine (2) und der elektrischen Maschine (3) angeordneten Kupplungseinrichtung (5), mit einer im Fahrzeughybridantriebsstrang (1) in Bezug auf die Brennkraftmaschine (2) der Kupplungseinrichtung (5) nachgeschalteten und von der Brennkraftmaschine (2) sowie der elektrischen Maschine (3) antreibbaren Ölpumpeneinrichtung (7) und mit einer Getriebeeinrichtung (6), die mehrere Schaltelemente zur Darstellung verschiedener Übersetzungen aufweist und die von der Ölpumpeneinrichtung (7) betriebszustandsabhängig mit Hydraulikfluid versorgt wird, wobei eine Drehzahl der elektrischen Maschine (3) unabhängig von der Drehzahl der Brennkraftmaschine (2) eingestellt wird, um die Getriebeeinrichtung (6) jeweils mit einem für den jeweiligen Betriebspunkt der Getriebeeinrichtung (6) erforderlichen Hydraulikfluidvolumenstrom zu versorgen, **dadurch gekennzeichnet, dass** die Drehzahl der elektrischen Maschine (3) im Bereich des Fahrzeugstillstandes einem Stillstandsdrehzahlwert entspricht, der kleiner als eine Leerlaufdrehzahl der Brennkraftmaschine (2) ist, wobei die von der elektrischen Maschine (3) angetriebene Ölpumpeneinrichtung (7) die Schaltelemente zur Darstellung eines aktuellen Betriebszustandes der Getriebeeineinrichtung (6) wenigstens teilweise in zugeschaltetem Zustand hält, der Drehzahlwert der elektrischen Maschine (3) im Bereich des Fahrzeugstillstandes angehoben wird, wenn eine Schaltanforderung für einen Übersetzungswechsel von einer Anfahrübersetzung in eine höhere Übersetzungsstufe vorliegt und/oder wenn eine Schaltanforderung für einen Übersetzungswechsel von einer höheren Übersetzungsstufe in eine Anfahrübersetzung vorliegt.

2. Verfahren nach Anspruch 1, **dadurch gekennzeichnet, dass** der Drehzahtwert der elektrischen Maschine (3) im Bereich des Fahrzeugstillstandes ausgehend vom Stillstandsdrehzahlwert angehoben wird, wenn eine Anforderung zum Einlegen einer Übersetzung in der Getriebeeinrichtung (6) ausgehend von einem Neutralbetriebszustand vorliegt, während dessen ein Kraftfluss des Fahrzeughybridantriebsstranges (1) im Bereich der Getriebeeinrichtung (6) unterbrochen ist.

3. Verfahren nach Anspruch 1 oder 2, **dadurch gekennzeichnet, dass** der Drehzahlwert der elektrischen Maschine (3) im Bereich des Fahrzeugstillstandes ausgehend vom Stillstandsdrehzahlwert angehoben wird, wenn eine Anforderung zum Auslegen einer Parksperreneinrichtung vorliegt.

4. Verfahren nach einem der Ansprüche 1 bis 3, **dadurch gekennzeichnet, dass** der Drehzahlwert der elektrischen Maschine (3) bei Vorliegen einer Anforderung für einen Anfahrvorgang des Fahrzeuges ausgehend vom Stillstandsdrehzahlwert angehoben wird.

5. Verfahren nach einem der Ansprüche 1 bis 4, **dadurch gekennzeichnet, dass** der Drehzahlwert der elektrischen Maschine (3) bei Vorliegen einer Anforderung zum Starten der Brennkraftmaschine ausgehend vom Stillstandsdrehzahlwert angehoben wird.

6. Verfahren nach einem der Ansprüche 1 bis 5, **dadurch gekennzeichnet, dass** der Drehzahlwert der elektrischen Maschine (3) bei einer Fahrzeuggeschwindigkeit größer Null in Abhängigkeit des über die Getriebeeinrichtung (6) zu führenden Drehmomentes eingestellt wird.

## Claims

1. Method for operating a vehicle hybrid drive train (1) having an internal combustion engine (2) and having an electrical machine (3), the torques of which can be applied to an output drive (4) of the vehicle hybrid drive train (1), having a clutch device (5) which is arranged between the internal combustion engine (2) and the electrical machine (3), having an oil pump device (7) which is connected downstream of the clutch device (5) in relation to the internal combustion engine (2) in the vehicle hybrid drive train (1) and which can be driven by the internal combustion engine (2) and the electrical machine (3), and having a gear mechanism device (6) which has a plurality of switching elements for representing different transmission ratios and which is supplied with hydraulic fluid by the oil pump device (7) depending on the operating state, wherein a rotation speed of the electrical machine (3) is set independently of the rotation speed of the internal combustion engine (2) in order to in each case supply the gear mechanism device (6) with a volumetric flow of hydraulic fluid which is required for the respective operating point of the gear mechanism device (6), **characterized in that** the rotation speed of the electrical machine (3) when the vehicle is stationary corresponds to a stationary rotation speed value which is lower than an idling rotation speed of the internal combustion engine (2), wherein the oil pump device (7) which is driven by the electrical machine (3) holds the switching elements for representing a current operating state of the gear mechanism device (6) at least partially in a switched-on state, the rotation speed value of the electrical machine (3) is raised when the vehicle is stationary if a switching request is made to change the transmission ratio from a start-up transmission ratio to a higher transmission ratio stage and/or if a switching request is made to change the transmission ratio from a relatively high transmission ratio stage to a start-up transmission ratio.

2. Method according to Claim 1, **characterized in that** the rotation speed value of the electrical machine (3) when the vehicle is stationary is raised starting from the stationary rotation speed value if a request is made to apply a transmission ratio to the gear mechanism device (6) starting from a neutral operating state, while a force flow of the vehicle hybrid drive train (1) in the region of the gear mechanism device (6) is interrupted.

3. Method according to Claim 1 or 2, **characterized in that** the rotation speed value of the electrical machine (3) when the vehicle is stationary is raised starting from the stationary rotation speed value if a request is made to disengage a parking brake device.

4. Method according to one of Claims 1 to 3, **characterized in that** the rotation speed value of the electrical machine (3) is raised starting from the stationary rotation speed value when a request for a start-up process of the vehicle is made.

5. Method according to one of Claims 1 to 4, **characterized in that** the rotation speed value of the electrical machine (3) is raised starting from the stationary rotation speed value when a request is made to start the internal combustion engine.

6. Method according to one of Claims 1 to 5, **characterized in that**, at a vehicle speed of greater than zero, the rotation speed value of the electrical machine (3) is set as a function of the torque which is to be controlled by means of the gear mechanism device (6).

## Revendications

1. Procédé de fonctionnement de la chaîne cinématique (1) d'un véhicule hybride comprenant un moteur à combustion interne (2) et un moteur électrique (3), dont les couples peuvent être appliqués à une sortie (4) de la chaîne cinématique (1) du véhicule hybride, un dispositif d'embrayage (5) disposé entre le moteur à combustion interne (2) et le moteur électrique (3), un dispositif de pompe à huile (7) monté après le dispositif d'embrayage (5) par rapport au moteur à combustion interne (2) dans la chaîne cinématique (1) du véhicule hybride, et pouvant être entraîné par le moteur à combustion interne (2) ainsi que par le moteur électrique (3) et un dispositif de transmission (6), qui présente plusieurs éléments de commutation pour représenter différents rapports de démultiplication et qui est alimenté en fluide hydraulique par le dispositif de pompe à huile (7) en fonction de l'état de fonctionnement, un régime du moteur électrique (3) étant ajusté indépendamment du régime du moteur à combustion interne (2), afin d'alimenter le dispositif de transmission (6) à chaque fois avec un débit volumique de fluide hydraulique requis pour le point de fonctionnement respectif du dispositif de transmission (6), **caractérisé en ce que** le régime du moteur électrique (3) dans la région de l'état d'arrêt du véhicule correspond à une valeur de régime d'arrêt qui est inférieure à un régime de marche à vide du moteur à combustion interne (2), le dispositif de pompe à huile (7) entraîné par le moteur électrique (3) maintenant les éléments de commutation au moins en partie dans l'état enclenché pour représenter un état de fonctionnement actuel du dispositif de transmission (6), la valeur de régime du moteur électrique (3) étant augmentée dans la région de l'état d'arrêt du véhicule s'il se produit une demande de commutation pour un changement de rapport de démultiplication depuis un rapport de démultiplication de démarrage à un étage de rapport de démultiplication plus élevé, et/ou s'il se produit une demande de commutation pour un changement de rapport de démultiplication depuis un étage de rapport de démultiplication plus élevé dans un rapport de démultiplication de démarrage.

2. Procédé selon la revendication 1, **caractérisé en ce que** la valeur de régime du moteur électrique (3) dans la région de l'état d'arrêt du véhicule est augmentée à partir de la valeur de régime d'arrêt, s'il se produit une demande d'enclenchement d'un rapport de démultiplication dans le dispositif de transmission (6) à partir d'un état de fonctionnement neutre, tandis qu'un flux de force de la chaîne cinématique (1) du véhicule hybride est interrompu dans la région du dispositif de transmission (6).

3. Procédé selon la revendication 1 ou 2, **caractérisé en ce que** la valeur de régime du moteur électrique (3) dans la région de l'état d'arrêt du véhicule est augmentée à partir de la valeur de régime d'arrêt s'il se produit une demande de sortie d'un dispositif d'arrêt de stationnement.

4. Procédé selon l'une quelconque des revendications 1 à 3, **caractérisé en ce que** la valeur de régime du moteur électrique (3) est augmentée s'il se produit une demande d'une opération de démarrage du véhicule à partir d'un valeur de régime d'arrêt.

5. Procédé selon l'une quelconque des revendications 1 à 4, **caractérisé en ce que** la valeur de régime du moteur électrique (3) est augmentée s'il se produit une demande de démarrage du moteur à combustion interne à partir d'une valeur de régime d'arrêt.

6. Procédé selon l'une quelconque des revendications 1 à 5, **caractérisé en ce que** la valeur de régime du moteur électrique (3) est ajustée, dans le cas d'une vitesse du véhicule supérieure à zéro, en fonction du couple à transmettre par le dispositif de transmission (6).
